# EUROPÄISCHE PATENTSCHRIFT

(11) **EP 3 475 212 B1**
(45) Veröffentlichungstag und Bekanntmachung des Hinweises auf die Patenterteilung: **29.04.2020**
(21) Anmeldenummer: 17727183.0
(22) Anmeldetag: 29.05.2017
(51) Int. Cl.: B66F 9/07, B65G 1/04

(54) **HOCHREGALLAGER MIT DARIN ZUM EIN- UND AUSLAGERN ODER UMLAGERN VON LAGERGUT VORGESEHENEN REGALBEDIENGERÄTEN**
HIGH-BAY WAREHOUSE WITH STORAGE-AND-RETRIEVAL UNITS PROVIDED THEREIN FOR STORING AND RETRIEVING, OR TRANSFERRING, ARTICLES
ENTREPÔT À HAUT RAYONNAGE COMPRENANT, À L'INTÉRIEUR, DES TRANSSTOCKEURS DESTINÉS À STOCKER ET DÉSTOCKER OU TRANSFÉRER DES MARCHANDISES ENTREPOSÉES

(30) Priorität: 23.06.2016 DE 102016211301
(43) Veröffentlichungstag der Anmeldung: 01.05.2019
(73) Patentinhaber: AMOVA GmbH, 57250 Netphen (DE)
(72) Erfinder: HEIDE, Carsten, 57250 Netphen (DE); BRÜCK, Volker, 57555 Mudersbach (DE)
(74) Vertreter: Grosse, Wolf-Dietrich Rüdiger
(86) Internationale Anmeldenummer: PCT/EP2017/062831
(87) Internationale Veröffentlichungsnummer: WO 2017/220285

(56) Entgegenhaltungen:
- JP-A- H0 597 206
- JP-A- S63 185 708

## Beschreibung

Die Erfindung betrifft ein Hochregallager mit darin zum Ein- und Auslagern oder Umlagern von Lagergut vorgesehenen Regalbediengeräten, wobei das Lagergut aus zu Bunden (Coils) gewickelten Bändern, insbesondere Metallbänder, oder Drahtbunden und das Hochregallager aus beliebig vielen, in Längsrichtung und der quer dazu verlaufenden Tiefen- bzw. Breitenrichtung des Hochregallagers aneinandergereihten und in der Höhe mehrere übereinanderliegende Regalfächer aufweisenden Lagermodulen besteht, die durch sich parallel zu den Ein- bzw. Auslagerungsseiten der Regalfächer bzw. Lagermodule erstreckenden Gassen voneinander getrennt sind, wobei in jeder Gasse mindestens ein hin und her verfahrbares Regalbediengerät vorgesehen ist, wobei die Regalbediengeräte mit einem aus Vertikalständern und diese miteinander verbindenden Kopf- und Fußholmen bestehenden, mindestens der Höhe der mehrgeschossigen Lagermodule entsprechenden Rahmen ausgebildet sind, an dessen Vertikalständern eine über Antriebsmittel bewegte, zur links- und rechtsseitigen Bedienung der Regalfächer der benachbarten Lagermodule mit mindestens einer orthogonal zur Gasse schubweise ein- und ausrückbaren Teleskopieraufnahme ausgebildete Hubbrücke geführt wird.

Solche Hochregallager für Walzwerkerzeugnisse, insbesondere Metallbunde oder Drahtbunde, nachfolgend vereinheitlicht metallisches Lagergut genannt, sind in verschiedenen Ausführungen und Anordnungen bekannt, z. B. integriert in den Fertigungsablauf einer Walzstraße. Durch die CH-PS 554 276 ist es bekannt geworden, ein Hochregallager jeweils am Anfang und am Ende der Walzstraße bzw. am Anfang und am Ende einer Adjustage oder als Zwischenlager zwischen zwei langgestreckten Werkshallen vorzusehen. Zum Transport von im Anschluss an einen Walzvorgang erzeugten Drahtbunden oder durch Aufwickeln eines gewalzten Metallbandes, z. B. Aluminium, erzeugten, beispielsweise 25 t oder mehr wiegenden Metallbundes / Coils, kommen z. B. in einem Umlaufsystem eingesetzte Paletten und diese weiter fördernde Rollgänge, Bundwagen oder dergleichen Transporteinrichtungen zum Einsatz. Die Verteilung des zugeführten Lagerguts im Hochregallager kann durch in den Gassen verfahrbare Flurstapler, ggf. kombiniert mit in Dachaufbauten des Hochregallagers integrierten, alle Gassen überstreichenden Lagerkranen, durch einen auf aufgeständerten Schienen über die Lagermodule des Hochregallagers verfahrbaren Portalkran (vgl. DE 297 04 341 U1) oder dergleichen erfolgen.

Aus der WO 2015/124342 A1 ist für eine Umschlaganlage eines See- oder Binnenhafens ein integriertes, vollautomatisches Containertransportsystem mit in jeder Gasse angeordneten Regalbediengeräten bekannt, das bei einer engen Bauweise des Hochregallagers einen Zugriff auf jeden einzelnen Container auch mit den eingesetzten Flurstaplern ermöglicht.

Die in ihren Abmessungen schmal gebauten, die Container mit ihren Längsseiten voran in die Regalfächer ein- bzw. auslagernden Regalbediengeräte sind flurgebunden verfahrbar. Das Anheben und Absenken der Hubbrücke erfolgt über eine Seilzugvorrichtung bzw. ein Hubwerk, umfassend ein Seil, Seiltrommeln, Umlenkrollen, Motoren und Getriebe. An der Hubbrücke bzw. -bühne sind zum hängenden Transport der Container Lastaufnahmemittel vorgesehen, die äußerst platzsparend als schubweise gemeinsam mit einem angehängten Container horizontal ein- bzw. auszufahrende Teleskopieraufnahmen ausgebildet sind.

Die Teleskopieraufnahme (n) setzt sich aus einem an der Hubbrücke befestigten Grundgehäuse bzw. Oberprofil und zwei darin als Mittelprofil sowie Unterprofil angeordneten Teleskopschüben zusammen. Das Mittelprofil bzw. der äußere Teleskopschub läuft mit beidseitigen Außen-Führungsprofilen auf Laufrollen des Grundgehäuses / Oberprofils und das Unterprofil bzw. der innere Teleskopschub läuft mit beidseitig angeordneten Laufrollen in Innen-Führungsprofilen des äußeren Teleskopschubs / Mittelprofils.

JP-S-63185708A offenbart ein Hochregallager gemäß dem Oberbegriff des Anspruchs 1.

Der Erfindung liegt die Aufgabe zugrunde, bei einem Hochregallager der eingangs genannten Art durch optimierte Transport- und Übergabemittel einen beschleunigten Umschlag von Coils und Drahtbunden mit verringertem Aufwand zu ermöglichen.

Diese Aufgabe wird durch ein Hochregallager gemäß Anspruch 1 gelöst. Das Regalbediengerät ist an seiner mindestens einen Teleskopieraufnahme mit einem C-förmigen, unterhalb der Teleskopieraufnahme einen horizontal verlaufenden, in das Bundauge des Lagerguts einfahrbaren Dorn aufweisenden Tragmittel ausgebildet.

Zum Übernehmen des eingeförderten und in den Gassen positionierten Lagerguts im Auge des Coils bzw. Drahtbundes braucht der in einem ausreichenden Abstand - abhängig vom größten, z. B. 2400 mm, zu handhabenden Bunddurchmesser - unterhalb der Teleskopieraufnahme verlaufende Dorn, Steg oder dergleichen lediglich in das Bundauge eingefahren zu werden, bis der Bund bzw. das Coil vollständig auf dem Dorn des Regalbediengerätes hängt, das dann das Einlagern in bzw. mit umgekehrten Bewegungsabläufen das Auslagern aus den Regalfächern ohne weitere zwischengeschaltete Förder- und Transportmittel übernimmt.

Das C-förmige Tragmittel wird am Unterprofil bzw. inneren Teleskopschub der an der Hubbrücke montierten Teleskopieraufnahme befestigt und kann somit aus der in das Regalbediengerät zurückgezogenen Lage schubweise bis zur Endlage in ein Regalfach eingefahren bzw. umgekehrt ausgefahren werden.

Die Erfindung sieht vor, dass das Regalbediengerät zum Handling von Lagergut unterhalb seiner Fahrebene mit einer im Fußholm rahmenartigen Durchgangsöffnung ausgebildet ist. Dies ermöglicht in vorteilhafter Weise, dass das Regalbediengerät oberhalb einer zumindest einige Gassen kreuzenden Quer-Fördereinrichtung verfahrbar ist.

Wenn das C-förmige Tragmittel in bevorzugter Ausführung über einen Drehkranz, an den die mindestens eine Teleskopieraufnahme befestigt ist, mit der Hubbrücke verbunden wird, lassen sich durch einfaches Drehen des C-förmigen Tragmittels die Regalfächer von links und rechts neben der Gasse angeordneten Lagermodulen bedienen.

Eine weitere vorteilhafte Ausgestaltung sieht vor, dass am Drehkranz links- und rechtsseitig in Bezug auf die mit der vertikalen Mittenachse des Lagerguts zusammenfallende vertikale Mittenachse des Regalbediengerätes je eine Teleskopieraufnahme vorgesehen ist, wobei das C-förmige Tragmittel aus einem von jeder Teleskopieraufnahme abgeknickt in Richtung auf die vertikale Mittenachse verlaufenden, dort endenden Winkelarm besteht und im Schnittpunkt der beiden Winkelarme der Dorn angeordnet ist.

Gegenüber einer mittig an der Hubbrücke / dem Drehkranz vorgesehenen Teleskopieraufnahme läßt sich hierdurch die Bauhöhe der Regalfächer sowie damit der Lagermodule und folglich insgesamt des Hochregallagers merklich verringern. Denn in dem durch die beiden voneinander beabstandeten Teleskopieraufnahmen mit dem symmetrisch gespreizten C-förmigen Tragmittel gewonnenen Freiraum läßt sich die Regalfachaufnahme mit einer muldenartig an den Bunddurchmesser angepaßten, d. h. sowohl einem kleinsten als auch einem größten Bunddurchmesser eine ausreichende Auflage bietenden Absenkung ausbilden. Die Bauhöhenverringerung kann 500 mm und mehr je Regalfachebene betragen, was eine erhebliche Stahlbauersparnis mit sich bringt.

Ausgehend davon, dass die Gassen parallel zu den langen Seiten (Längsseiten des Hochregallagers verlaufend angeordnet sind, erstreckt sich die Quer-Fördereinrichtung bzw. erstrecken sich mehrere Quer-Fördereinrichtungen, die im Abstand voneinander an den Längsseiten verteilt vorgesehen werden können, flurseitig, d. h. am Lagerboden bzw. -fundament oder in einer grubenartigen Vertiefung des Fundaments über die gesamte Tiefe/Breite des Hochregallagers. Die Querfördereinrichtung kann z. B. aus Rollgangsrollen bestehen, von denen zumindest einige angetrieben sind, auf denen das auf Paletten abgestellte Lagergut unmittelbar in Förderrichtung ablaufen und in den Gassen positioniert werden kann. Optional können beispielsweise Förderwagen oder dergleichen Fördermittel zum Einsatz kommen.

Zum Handling des über eine flurseitige oder vertiefte Quer-Fördereinrichtung den einzelnen Gassen des Hochregallagers zugeführten Lagerguts wird die Hubbrücke des unmittelbar oberhalb der untersten Regalfächer bzw. der untersten Regalfachebene verfahrbaren Regalbediengerätes soweit abgesenkt, bis der Dorn der Teleskopieraufnahme mit dem Bundauge fluchtet und dann durch schubweises Teleskopieren in das Auge eingefahren werden kann. Das Lagergut wird danach durch Anheben der Hubbrücke von dem Dorn übernommen und an diesen hängend durch schubweises Teleskopieren der Teleskopieraufnahme in das Regalbediengerät eingefordert. Anschließend kann es durch Verfahren des Regalbediengerätes in der Gasse vor ein beliebiges Regalfach der benachbarten Lagermodule verbracht und nach einer 90°-Drehung entweder links oder rechts durch schubweises Teleskopieren in das gewünschte Regalfach eingelagert werden, worauf der Dorn in seine Ausgangslage zurück teleskopiert wird, so daß dass Regalbediengerät für einen erneuten Ein- und / oder Auslagerungsvorgang bereit steht. Den auch für die Hubbrücke mit dem Drehkranz und der mindestens einen Teleskopieraufnahme freien Durchtritt des unterhalb der Fahrebene übernommenen Lagerguts in die darüber liegenden Regalfachebenen ermöglicht die rahmenartige Durchgangsöffnung des Fußholms bzw. Fahrrahmens. Die Quer-Fördereinrichtung läßt sich mit einer Rücklaufstrecke zu einem Umlaufsystem kombinieren, so dass die leeren Paletten oder Förderwagen in einem Kreislauf zum Einsatz kommen können.

Das Handling des Lagerguts unterhalb der Fahrebene der Regalbediengeräte wird dadurch begünstigt, dass die Vertikalständer des Geräterahmens bis etwas unter der Fahrebene endend verlängert sind, was gleichzeitig eine zentrierte Führung der sich absenkenden bzw. anhebenden Hubbrücke über diese nach unten verlängerte Strecke ermöglicht, z. B. mittels sich an den Verlängerungen abstützenden Rollen.

Nach einer Ausgestaltung der Erfindung sind dem Regalbediengerät in jeder Gasse zwei im horizontalen Abstand voneinander verlaufende Schienen entweder auf dem Lagerflur oder hochgelegt, in einer Höhe oberhalb der von einer Reihe aufeinanderfolgender Lagermodule auf der untersten Regalfachebene ausgebildeten, das zugeführte Lagergut in einer Linie übernehmenden Quer-Fördereinrichtung, zugeordnet. Durch das Verlegen von Schienen oberhalb der untersten Regalfachebene läßt sich ein herkömmliches Hochregallager in einfacher Weise umrüsten, um zum Einfördern des Lagerguts eine Quer-Fördereinrichtung vorzusehen.

Weitere Merkmale und Einzelheiten der Erfindung ergeben sich aus den Ansprüchen und der nachfolgenden Beschreibung von in den schematischen Zeichnungen am Beispiel eines Hochregallagers mit einer 2-gassigen Lagerung von Coils dargestellten Ausführungsbeispielen der Erfindung. Es zeigen:
- Fig. 1: ein 2-gassiges Hochregallager im Querschnitt von der Breit- bzw. Tiefenseite her gesehen;
- Fig. 2: das Hochregallager in einem Längsschnitt mit Ansicht auf ein in einer sich in Lagerlängsrichtung erstreckenden Gasse verfahrbares Regalbediengerät;
- Fig. 3: das Hochregallager in einer Draufsicht von oberhalb der untersten Regalfachebene bzw. unterhalb der verfahrbaren Regalbediengeräte her gesehen;
- Fig. 4: als Einzelheit eines Regalbediengerätes in einer perspektivischen Vorderansicht die Hubbrücke bzw. Hubwerksbühne mit daran befestigter Teleskopieraufnahme und an dieser angeordnetem C-förmigen Tragmittel, dessen horizontaler Steg / Dorn ein Coil aufgenommen hat;
- Fig. 5: in einer Seitenansicht als Einzelheit die Hubbrücke mit Teleskopieraufnahme und C-förmigen Tragmittel, in der rechten Bildhälfte mit strichpunktierten Linien in der zurückgezogenen Endlage und in der linken Bildhälfte mit den ausgefahrenen Teleskopschüben und von dem Dorn des C-förmigen Tragmittels aufgenommenen Coil dargestellt; und
- Fig. 6: von einem Regalfach her gesehen das zur Einlagerung eines Coils positionierte, an zwei horizontal voneinander beabstandeten Teleskopieraufnahmen in der Bauweise nach Fig. 5 ausgebildete C-förmige Tragmittel, in der rechten Bildhälfte mit auf dem in das Auge eingetauchten Dorn hängenden Coil / Lagergut und in der linken Bildhälfte nach dem Ablegen des Coils auf eine muldenartige Absenkung der Regalfachauflage dargestellt.

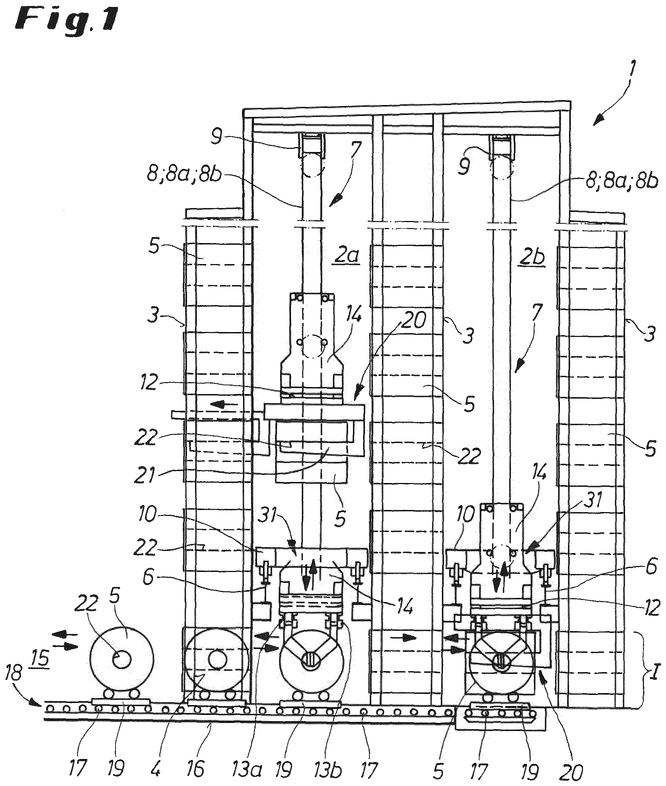

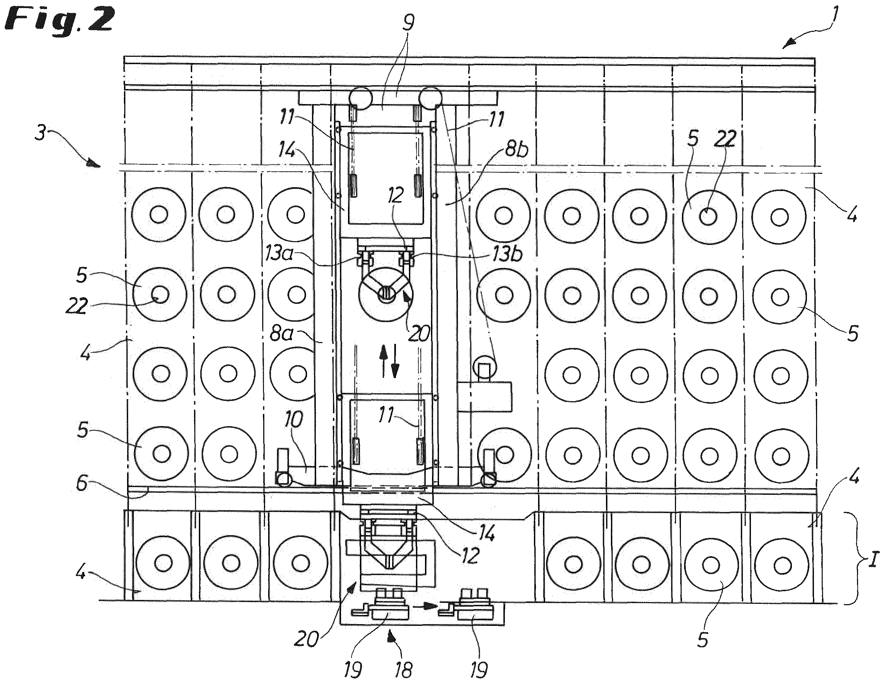

Das im Ausführungsbeispiel gezeigte Hochregallager 1 besteht aus drei in Breitenrichten durch eine erste und eine zweite Gasse 2a, 2b voneinander beabstandeten Lagermodulen 3, die über die Breite / Tiefe und Höhe sowie über die Länge des Hochregallagers 1 parallel zu den Gassen 2a, 2b zahlreiche Regalfächer 4 für das Lagergut 5, hier Coils, aufweisen (vgl. Fig. 2). Zur Ein- und Auslagerung der Coils 5 ist in jeder Gasse 2a, 2b auf hochgelegten, oberhalb der untersten Regalfachebene, optional auf dem Lagerfundament, vorgesehenen Schienen 6 ein Regalbediengerät 7 verfahrbar (vgl. Fig. 1).

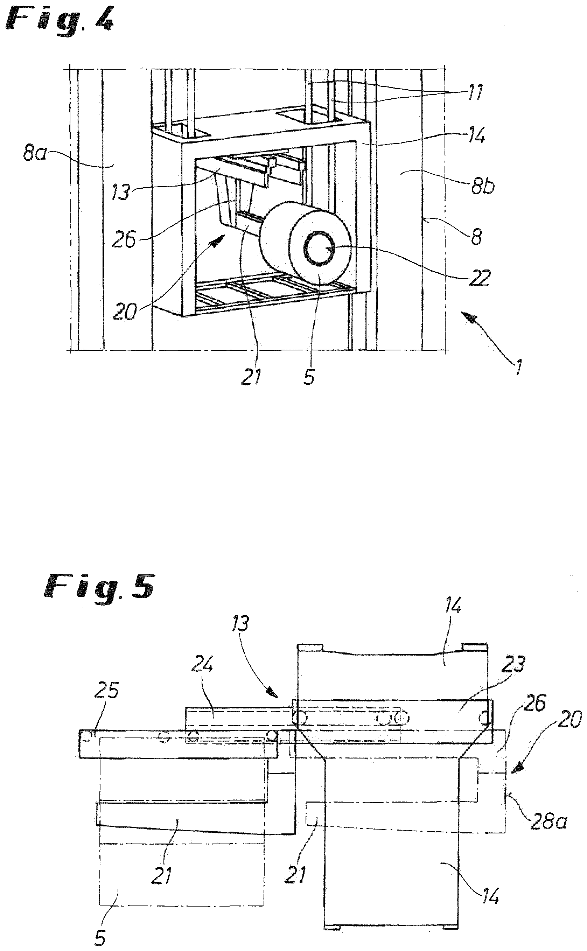

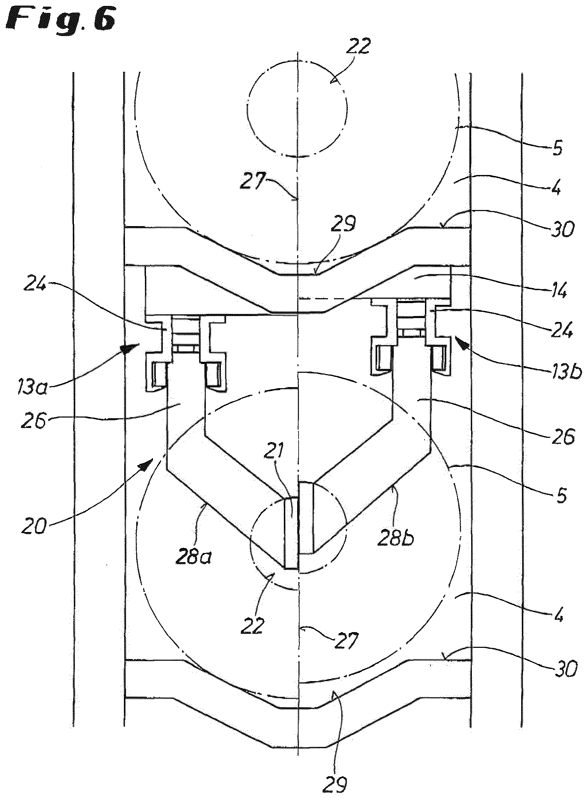

Die Regalbediengeräte 7 besitzen einen aus Vertikalständern 8a, 8b und diese miteinander verbindenden Kopf- und Fußholmen 9 bzw. 10 bestehenden, über die Höhe der mehrgeschossigen Lagermodule 3 hinausreichenden Rahmen 8, an dessen Vertikalständern 8a, 8b eine über die Antriebsmittel 11 (über Rollen laufende Seilzüge) bewegte, zur links- und rechtsseitigen Bedienung der Regalfächer 4 benachbarter Lagermodule 3 mit mindestens einer über einen Drehkranz 12 (wie in den Fig. 1 und 2 angedeutet) drehbaren und orthogonal zur Gasse 2a, 2b schubweise ein- und ausrückbaren Teleskopieraufnahme 13 (vgl. Fig. 4) bzw 13a, 13b (vgl. die Fig. 6) ausgebildete Hubbrücke (bzw. Hubwerksbühne) 14 geführt wird.

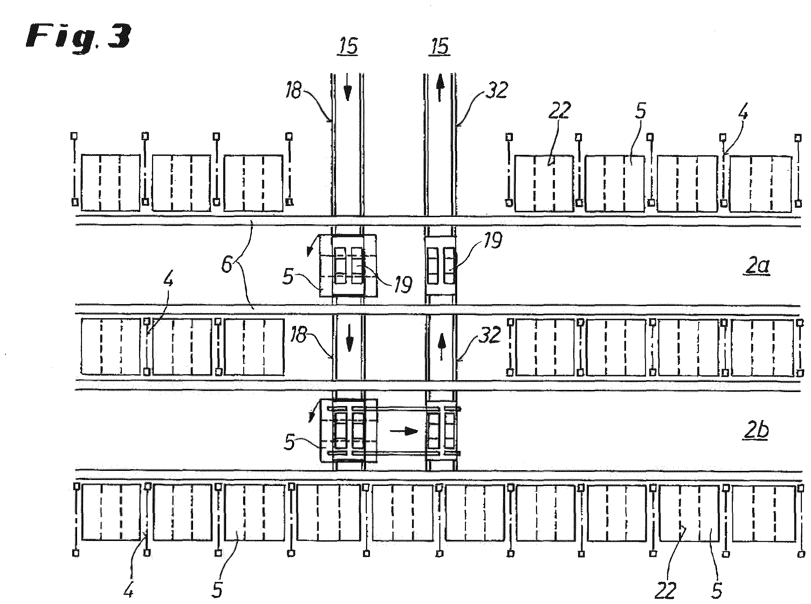

Wie den Fig. 1 bis 3 entnommen werden kann, ist die unterste Regalfachebene I der in Reihe aufeinanderfolgenden Lagermodule 3 ausgehend von einer Zuführung 15 an einer Längsseite des Hochregallagers 1 (vgl. Fig. 3) mit einer auf dem Fundament 16 vorgesehenen, aus Förderrollen 17 bestehenden Quer-Fördereinrichtung 18, die die Gassen 2a, 2b kreuzt bzw. in diese mündet, ausgebildet. Die von einer Haspellage einer Walzstraße (nicht dargestellt) übernommenen Coils 5 werden von einem Transportmittel bis zur Zuführung 15 an der Längsseite des Hochregallagers 1 beispielsweise mittels Paletten 19 verbracht und auf die Quer-Fördereinrichtung 18 abgestellt. Die beladenen Paletten 19 laufen auf den Förderrollen 17 der Quer-Fördereinrichtung 18 die Regalfächer 4 der untersten Regalfachebene I passierend bis zur ersten Gasse oder bis zur zweiten Gasse 2b, wo sie zur Verteilung in die Regalfächer 4 der Lagermodule 3 durch das Regalbediengerät 7 übernommen werden.

Das Übernehmen der Coils 5 erfolgt mit mindestens einer, wie in Fig. 4 gezeigt, mittig an der Hubbrücke 14 befestigten Teleskopieraufnahme 13, die dazu mit einem C-förmigen Tragmittel 20 ausgerüstet ist, dessen horizontal verlaufender Dorn 21 den Coil 5 durch Eintauchen in dessen Auge 22 erfasst. Die Teleskopieraufnahme 13 besteht, wie sich das näher der Fig. 5 entnehmen läßt, aus einem an der Hubbrücke 14 befestigten Grundgehäuse bzw. Oberprofil 23 und zwei darin als Mittelprofil 24 sowie Unterprofil 25 angeordneten, über Rollen sukzessive verfahrbaren Teleskopschüben. Das C-förmige Tragmittel 20 ist über seinen Vertikalsteg 26 am Unterprofil bzw. inneren Teleskopschub 25 befestigt. Die Teleskopieraufnahme 13 ermöglicht in der zurückgezogenen Ausgangslage (vgl. Fig. 4) einen äußert platzsparenden Transport und entsprechend optimal schmale Gassen 2a, 2b, gleichzeitig aber auch einen je nach Auslegung der Teleskopschübe gewünscht großen, z. B. 3000 mm, Ein- bzw. Auslagerungshub.

Die Fig. 6 zeigt eine Ausführung eines Regalbediengerätes 7 mit zwei Teleskopieraufnahmen 13a, 13b, die links und rechts neben der vertikalen Mittenachse 27 des Regalbediengerätes 7 bzw. der damit zusammenfallenden vertikalen Mittenachse des Coils 5 angeordnet sind. Das C-förmige Tragmittel 20 besteht hier aus zwei Winkelarmen 28a, 28b, von denen je einer mit seinem Vertikalsteg 26 am Unterprofil 25 bzw. inneren Teleskopschub der einen und der anderen Teleskopieraufnahme 13a bzw. 13b befestigt ist. Die Abknickungen der beiden Winkelarme 28a, 28b laufen aufeinander zu mit Schnittpunkt in der vertikalen Mittenachse 27. In diesem Schnittpunkt ist der horizontale Dorn 21 angeordnet. Die damit erreichte Spreizung des C-förmigen Tragmittels 20 ermöglicht es, den Freiraum zur Ausbildung einer muldenartigen Absenkung 29 der Coilauflage 30 in den Regalfächern 4 der Lagermodule auszunutzen. Hierdurch läßt sich bei gleicher Lagerkapazität die Bauhöhe des Hochregallagers 1 gegenüber Regalfächern mit einer ebenen Coilauflage merklich verringern. Die Fig. 1, 2 und 5 zeigen solche an zwei Teleskopieraufnahmen 13a, 13b angebundenen C-förmigen Tragmittel 20.

Die Coils 5 werden von der Quer-Fördereinrichtung 18 mit im Ausführungsbeispiel orthogonal zur Transportrichtung liegendem Auge 22 auf den Paletten 19 bis in die Gassen 2a oder 2b verfahren und mit in Transportrichtung liegendem Auge 22 in die Regalfächer 4 eingelagert, was eine 90°-Drehung des C-förmigen Tragmittels 20, eingeleitet über den Drehkranz 12, voraussetzt. Dazu wird - am Beispiel der Gasse 2a von Fig. 1 - die Hubbrücke 14 mit den zurückgezogenen Teleskopieraufnahmen 13a, 13b und dem C-förmigen Tragmittel 20 durch eine Durchtrittsöffnung 31 im Fußholm 10 des Regalbediengerätes 7 hindurch in die unterste Regalfachebene I abgesenkt und der Dorn 21 des C-förmigen Tragmittels 20 durch Ausrücken der Teleskopschübe 24, 25 in das Auge 22 des Coils 5 eingefahren. Sobald dann die Teleskopschübe 24, 25 wieder in ihre zurückgezogene Ausgangslage zurückbewegt worden sind (vgl. Fig. 5), heben die Antriebsmittel 11 die Hubbrücke 14 mit dem auf dem Dorn 21 hängenden Coil 5 durch die Durchtrittsöffnung 31 nach oben bis vor ein freies Regalfach 4 an, ggf. nach vorherigem Verfahren des Regalbediengerätes 7 in der Gasse 2a, worauf das C-förmige Tragmittel 20 um 90° gedreht wird, wie in Fig. 1 mit durchgezogenen Linien angedeutet. Durch schubweises Teleskopieren kann dann das Coil 5 in das Regalfach 4 eingelagert werden. Das Auslagern erfolgt in umgekehrter Abfolge.

Die Fig. 1 zeigt am Beispiel der hinteren Gasse 2b das Einlagern (bzw. Auslagern) eines Coils 5 in ein Regalfach 4, das sich auf der untersten Ebene I des Hochregallagers 1 benachbart zu der untersten Regalfachebene I mit der dort vorgesehenen Quer-Fördereinrichtung 18 befindet (vgl. auch Fig. 2). Das Coil 5 wird bei abgesenkter Hubbrücke 14, wie so auch für die Gasse 2a zuvor beschrieben, von dem C-förmigen Tragmittel 20 übernommen und auch sogleich in dieser untersten Ebene um 90° gedreht, wie mit durchgezogenen Linien des C-förmigen Tragmittels 20 angedeutet. In dieser gedrehten Position des Coils 5 verfährt das Regalbediengerät 7 auf den hochgelegten Schienen 6 bis vor ein freies Regalfach 4 der untersten Ebene des Hochregallagers 1.

Aus Fig. 2 in Verbindung mit Fig. 3 läßt sich entnehmen, dass für die Paletten 19 ein Umlaufsystem ausgebildet werden kann, indem sich parallel zur Quer-Fördereinrichtung 18 eine Rücklaufstrecke 32 erstreckt, auf der leere Paletten 19 nach dem Verfahren aus der Quer-Fördereinrichtung 18 zum erneuten Einsatz zurück zur Zuführung 15 transportiert werden können.

Das Regalbediengerät mit der durch den Fußholm 10 hindurch absenkbaren Hubbrücke 14 und dem drehbaren C-förmigen Tragmittel 20 erlaubt im Zusammenspiel mit der unterhalb der Fahrebene, hier in einer Linie einer untersten Regalfachebene I des Hochregallagers 1 ausgebildeten Quer-Fördereinrichtung 18 bei verringertem Aufwand und kompakt gebauten Hochregallager 1 einen hohen Durchsatz.

### Bezugszeichenliste

- 1: Hochregallager
- 2a, 2b: Gasse
- 3: Lagermodul
- 4: Regalfach
- 5: Lagergut (Coil, Drahtbund)
- 6: Schiene
- 7: Regalbediengerät
- 8: Rahmen
- 8a, 8b: Vertikalständer
- 9: Kopfholm
- 10: Fußholm
- 11: Antriebsmittel (Seilzug)
- 12: Drehkranz
- 13; 13a, 13b: Teleskopieraufnahme
- 14: Hubbrücke / Hubwerksbühne
- 15: Zuführung
- 16: Fundament
- 17: Förderrollen
- 18: Quer-Fördereinrichtung
- 19: Palette
- 20: C-förmiges Tragmittel
- 21: Dorn
- 22: Auge
- 23: Grundgehäuse / Oberprofil
- 24: Mittelprofil (Teleskopschub)
- 25: Unterprofil (Teleskopschub)
- 26: Vertikalsteg
- 27: vertikale Mittenachse

- 28a, 28b: Winkelarm
- 29: muldenartige Absenkung
- 30: Coilauflage
- 31: Durchgangsöffnung
- 32: Rücklaufstrecke

## Patentansprüche

1. Hochregallager (1) mit darin zum Ein- und Auslagern oder Umlagern von Lagergut (5) vorgesehenen Regalbediengeräten (7), wobei das Lagergut aus zu Bunden gewickelten Bändern, insbesondere Metallbänder, oder Drahtbunden und das Hochregallager (1) aus beliebig vielen, in Längsrichtung und der quer dazu verlaufenden Tiefen- bzw. Breitenrichtung des Hochregallagers aneinandergereihten und in der Höhe mehrere übereinanderliegende Regalfächer (4) aufweisenden Lagermodulen (3) besteht, die durch sich parallel zu den Ein- bzw. Auslagerungsseiten der Regalfächer bzw. Lagermodule (3; 4) erstreckenden Gassen (2 a, 2 b) voneinander getrennt sind, wobei in jeder Gasse (2 a, 2 b) mindestens ein hin und her verfahrbares Regalbediengerät (7) vorgesehen ist, wobei die Regalbediengeräte (7) mit einem aus Vertikalständern (8 a, 8 b) und diese miteinander verbindenden Kopf- und Fußholmen (9; 10) bestehenden, mindestens der Höhe der mehrgeschossigen Lagermodule (3) entsprechenden Rahmen (8) ausgebildet sind, an dessen Vertikalständern eine über Antriebsmittel bewegte, zur links- und rechtsseitigen Bedienung der Regalfächer (4) der benachbarten Lagermodule (3) mit mindestens einer orthogonal zur Gasse (2 a, 2 b) schubweise ein- und ausrückbaren Teleskopieraufnahme (13; 13 a, 13 b) ausgebildete Hubbrücke (14) geführt wird, wobei
das Regalbediengerät (7) an seiner mindestens einen Teleskopieraufnahme (13; 13a, 13b) mit einem C-förmigen, unterhalb der Teleskopieraufnahme (13; 13a, 13b) einen horizontal verlaufenden, in das Bundauge des Lagerguts (5) einfahrbaren Dorn (21) aufweisenden Tragmittel ausgebildet ist;
**dadurch gekennzeichnet,**
**dass** das Regelbediengerät (7) zum Handling von Lagergut (5) unterhalb seiner Fahrebene mit einer im Fussholm (10) rahmenartigen Durchgangsöffnung (31) ausgebildet ist.

2. Hochregallager nach Anspruch 1,
**dadurch gekennzeichnet,**
**dass** das C-förmige Tragmittel (20) an einem Drehkranz (12) der Hubbrücke (14) befestigt ist.

3. Hochregallager nach Anspruch 2,
**dadurch gekennzeichnet,**
**dass** am Drehkranz (12) links- und rechtsseitig in Bezug auf die mit der vertikalen Mittenachse des Lagerguts (5) zusammenfallende vertikale Mittenachse (27) des Regalbediengerätes (7) je eine Teleskopieraufnahme (13 a, 13 b) vorgesehen ist, wobei das C-förmige Tragmittel (20) aus einem von jeder Teleskopieraufnahme (13 a, 13 b) abgeknickt in Richtung auf die vertikale Mittenachse (27) verlaufenden, dort endenden Winkelarm (28 a, 28 b) besteht und im Schnittpunkt der beiden Winkelarme (28 a, 28 b) der Dorn (21) angeordnet ist.

4. Hochregallager nach einem der Ansprüche 1 bis 3,
**dadurch gekennzeichnet,**
**dass** das Regalbediengerät (7) oberhalb einer zumindest einige Gassen (2 a, 2 b) kreuzenden Quer-Fördereinrichtung (18) verfahrbar ist.

5. Hochregallager nach Anspruch 4,
**dadurch gekennzeichnet,**
**dass** dem Regalbediengerät (7) in jeder Gasse (2 a, 2 b) zwei im horizontalen Abstand voneinander verlaufende Schienen (6) entweder auf dem Lagerflur oder hochgelegt, in einer Höhe oberhalb der von einer Reihe aufeinanderfolgender Lagermodule (3) auf der untersten Regalfachebene (I) ausgebildeten, das zugeführte Lagergut (5) in einer Linie übernehmenden Quer-Fördereinrichtung (18), zugeordnet sind.

## Claims

1. A high-bay warehouse (1) with storage-and-retrieval units (7) provided therein for storing and retrieving or transferring articles (5), the articles consisting of strips, in particular metal strips, wound into coils, or wire coils, and the high-bay warehouse (1) consisting of any desired number of storage modules (3), which are lined up in a row in the longitudinal direction, and in the depth and width directions running transversely to the longitudinal direction, of the high-bay warehouse, have multiple compartments (4) located one above the other over the height and are separated from one another by aisles (2a, 2b) extending parallel to the storage and retrieval sides of the compartments or storage modules (3; 4), each aisle (2a, 2b) having at least one storage-and-retrieval unit (7) which can be moved back and forth, the storage-and-retrieval units (7) being designed with a frame (8) which consists of vertical uprights (8a, 8b) and head bars and foot bars (9; 10) connecting the vertical uprights to one another and corresponds at least to the height of the multi-storey storage modules (3), on the vertical uprights of which frame is guided a lifting bridge (14) which is moved via drive means and is designed with at least one telescopic holder (13; 13a, 13b), which can be retracted and extended in bursts orthogonally to the aisle (2a, 2b) for use of the compartments (4) of the adjacent storage modules (3) from the left and right sides, the storage-and-retrieval unit (7), on its at least one telescopic holder (13; 13a, 13b), being designed with a C-shaped carrying means which, beneath the telescopic holder (13; 13a, 13b), has a horizontal pin (21) which can be moved into the middle opening of the respective article (5);
**characterised in that**
the storage-and-retrieval unit (7) is designed with a frame-like through-opening (31) in the foot bar (10) for handling articles (5) below the travel level of the storage-and-retrieval unit.

2. The high-bay warehouse according to Claim 1,
**characterised in that**
the C-shaped carrying means (20) is fastened to a slewing ring (12) of the lifting bridge (14).

3. The high-bay warehouse according to Claim 2,
**characterised in that**
one telescopic holder (13a, 13b) is provided in each case on the left and right sides of the slewing ring (12) in relation to the vertical centre axis (27) of the storage-and-retrieval unit (7), which coincides with the vertical centre axis of the articles (5), wherein the C-shaped carrying means (20) consists of an angled arm (28a, 28b), which runs in an angled manner from each telescopic holder (13a, 13b) towards the vertical centre axis (27) and ends at said vertical centre axis, and the pin (21) is situated at the intersection point of the two angled arms (28a, 28b).

4. The high-bay warehouse according to any one of Claims 1 to 3,
**characterised in that**
the storage-and-retrieval unit (7) can be moved over a transverse conveyor (18) which crosses at least some aisles (2a, 2b).

5. The high-bay warehouse according to Claim 4,
**characterised in that**
the storage-and-retrieval unit (7) in each aisle (2a, 2b) is assigned two rails (6) which run at a horizontal distance from each other either on the warehouse floor or elevated at a height above the transverse conveyor (18), which is formed by a row of successive storage modules (3) on the lowest compartment level (I) and receives the supplied articles (5) in a line.

## Revendications

1. Entreposage à rayonnage en hauteur (1) avec des gerbeurs transstockeurs (7) prévus dedans pour charger et décharger ou transférer de la marchandise entreposée (5), sachant que la marchandise entreposée est composée de feuillards enroulés en tourets, en particulier de feuillards métalliques, ou de bobines de fils et l'entreposage à rayonnage en hauteur (1) de modules d'entreposage (3) comportant un nombre quelconque de compartiments d'étagère (4) alignés l'un à côté de l'autre dans la direction longitudinale et dans la direction de la profondeur ou de la largeur de l'entreposage à rayonnage passant transversalement à celle-ci et en hauteur plusieurs superposés dans la hauteur, qui sont séparés l'un de l'autres par des travées (2a, 2b) s'étendant parallèlement aux côtés de chargement ou de déchargement des compartiments d'étagères ou modules d'entreposage (3, 4), sachant que dans chaque travée (2a, 2b) au moins un gerbeur transstockeur (7) déplaçable dans un sens ou dans l'autre est prévu, sachant que les gerbeur transstockeurs (7) sont constitués avec un cadre (8) composé de montants verticaux (8a, 8b) et de longerons de tête et de pied (9, 10) reliant ceux-ci entre eux, correspondant au moins à la hauteur du module d'entreposage (3) à plusieurs étages, montants verticaux sur lesquels est guidé un pont levant (14) déplacé par un moyen d'entraînement, constitué pour la manœuvre à gauche et à droite des compartiment d'étagères (4) du module d'entreposage (3) voisin avec au moins un logement télescopique (13, 13a, 13b) enclenchable et déclenchable par poussée de manière orthogonale par rapport à la travée (2a, 2b), sachant que
le gerbeur transstockeur (7) est constitué au moins sur un de ses logements télescopiques (13, 13a, 13b) avec un moyen de support en forme de C comportant en dessous du logement télescopique (13, 13a, 13b) un mandrin (21) passant horizontalement, pouvant être introduit dans l'ouverture de touret de la marchandise entreposée (5),
**caractérisé en ce que**
le gerbeur transstockeur (7) pour la manutention de la marchandise entreposée (5) est constitué en dessous de son niveau de déplacement avec une ouverture de passage (31) de type cadre dans le longeron de pied (10).

2. Entreposage à rayonnage en hauteur selon la revendication 1,
**caractérisé en ce que**
le moyen de support (20) en forme de C est fixé à une couronne rotative (12) du pont levant (14).

3. Entreposage à rayonnage en hauteur selon la revendication 2,
**caractérisé en ce qu'**
un logement télescopique (13a, 13b) est respectivement prévu sur la couronne rotative (12) à gauche et à droite par rapport à l'axe médian (27) vertical du gerbeur transstockeur (7) coïncidant avec l'axe médian vertical de la marchandise entreposée (5), sachant que le moyen de support (20) en forme de C est composé d'un bras angulaire (28a, 28b) y aboutissant, passant depuis chaque logement télescopique (13a, 13b) replié en direction de l'axe médian (27) vertical et le mandrin (21) est disposé à l'intersection des deux bras angulaires (28a, 28b).

4. Entreposage à rayonnage en hauteur selon l'une quelconque des revendications 1 à 3,
**caractérisé en ce que**
le gerbeur transstockeur (7) peut être déplacé au-dessus d'un système de transport transversal (18) croisant au moins plusieurs travées (2a, 2b).

5. Entreposage à rayonnage en hauteur selon la revendication 4,
**caractérisé en ce que**
deux rails (6) passant à une distance horizontale l'un de l'autre sont attribués au gerbeur transstockeur (7) dans chaque travée (2a, 2b), soit au niveau de l'entreposage ou soit de façon surélevée, à une hauteur au-dessus du système de transport transversal (18) constitué sur le plan de rayonnage (I) le plus bas par un module d'entreposage (3) succédant à une rangée, prenant en charge dans une ligne la marchandise entreposée (5) acheminée.
